(19) Europäisches Patentamt
European Patent Office
Office européen des brevets

(11) **EP 3 060 942 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(21) Anmeldenummer: **14806592.3**

(22) Anmeldetag: **01.12.2014**

(51) Int Cl.:
*G01S 17/87* *(2006.01)*     *G01S 17/58* *(2006.01)*
*G01S 5/12* *(2006.01)*     *G01S 7/295* *(2006.01)*
*G01S 7/40* *(2006.01)*     *G01S 7/48* *(2006.01)*
*G01S 7/497* *(2006.01)*     *G01S 13/58* *(2006.01)*
*G01S 13/87* *(2006.01)*

(86) Internationale Anmeldenummer:
**PCT/EP2014/076062**

(87) Internationale Veröffentlichungsnummer:
**WO 2015/082383 (11.06.2015 Gazette 2015/23)**

(54) **VERFAHREN ZUR BESTIMMUNG EINER ANORDNUNG ZUMINDEST ZWEIER SENSOREN UND SENSORNETZWERK**

METHOD FOR DETERMINING A POSITION OF AT LEAST TWO SENSORS, AND SENSOR NETWORK

PROCÉDÉ POUR LA DÉTERMINATION DE LA DISPOSITION D'AU MOINS DEUX CAPTEURS ET RÉSEAUX DE CAPTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2013 DE 102013225164**

(43) Veröffentlichungstag der Anmeldung:
**31.08.2016 Patentblatt 2016/35**

(73) Patentinhaber: **Siemens Aktiengesellschaft 80333 München (DE)**

(72) Erfinder: **ZOEKE, Dominik Marco 90461 Nürnberg (DE)**

(56) Entgegenhaltungen:
**EP-A1- 2 461 181     US-A1- 2006 047 471**

**Beschreibung**

Die Erfindung betrifft ein Verfahren zur Bestimmung einer Anordnung zumindest zweier Sensoren sowie ein Sensornetzwerk.

In Sensornetzwerken, insbesondere in Sensornetzwerke mit drahtlosen Sensoren wie beispielsweise Funksensoren, werden regelmäßig Messinformationen mehrerer Sensoren zusammengeführt und gemeinsam ausgewertet. Die Zusammenführung der Messinformationen mehrerer Sensoren erfordert typisch eine genaue Kenntnis einer Anordnung der Sensoren zueinander. Im Vergleich zu Einzelsensoren sind Sensornetzwerke aufwändig zu installieren, zu warten oder zu verändern. Denn eine Bestimmung der Anordnung der Sensoren des Sensornetzwerks zueinander erfordert regelmäßig die Zuhilfenahme zusätzlicher Messgeräte, etwa Laser-Distanzmessgeräten, um nach einer Installation des Sensornetzwerks die relative Anordnung der Sensoren zueinander zu bestimmen.

Es ist ferner bekannt, im Falle kooperativer Sensoren eines Sensornetzwerks und direkter Sichtverbindung der Sensoren miteinander eine Sensor-zu-Sensor-Kommunikation zur Bestimmung der Anordnung der Sensoren zueinander heranzuziehen. Beispielsweise werden Abstände und Winkel der Sensoren zueinander per Multilaterationsverfahren ermittelt.

Ferner ist es bekannt, eine satellitengestützte Ortung der Sensoren eines Sensornetzwerks heranzuziehen, oder aber auf Basis mehrerer verteilter stationärer Landmarken bekannter Position die Positionen der Sensoren zu schätzen.

Die vorgenannten Verfahren nutzen jedoch häufig lediglich Abstands- und optional Winkelinformationen mindestens dreier Sensoren oder dreier Funksignalquellen. Zudem ist es bei den vorgenannten Verfahren häufig erforderlich, Signalquellen, Landmarken oder geeignet vorhandene Satelliten heranzuziehen.

Derartige Verfahren sind beispielsweise aus EP 2 461 181 A1 und US 2006/0047471 A1 bekannt.

Es ist daher Aufgabe der vorliegenden Erfindung, ein Verfahren zur Bestimmung einer Anordnung zumindest zweier Sensoren zueinander zu schaffen, mittels welchem eine relative Anordnung selbst lediglich zweier Sensoren zueinander unaufwändig und robust erfolgen kann. Ferner ist es Aufgabe der Erfindung, ein Sensornetzwerk anzugeben, mittels welchem das Verfahren einfach durchführbar ist.

Diese Aufgabe der Erfindung wird mit einem Verfahren mit den in Anspruch 1 angegebenen Merkmalen sowie mit einem Sensornetzwerk mit den in Anspruch 8 angegebenen Merkmalen gelöst. Bevorzugte Weiterbildungen der Erfindung ergeben sich aus den zugehörigen Unteransprüchen, der nachfolgenden Beschreibung und der Zeichnung.

Bei dem erfindungsgemäßen Verfahren zur Bestimmung einer Anordnung zumindest zweier Sensoren zueinander wird ein bewegtes Objekt mittels der zumindest zwei Sensoren erfasst und mittels je eines der Sensoren zumindest eine Bewegungsgröße des bewegten Objekts ermittelt, wobei zumindest diese Bewegungsgrößen oder jeweils davon abgeleitete Größen gemeinsam zur Bestimmung einer relativen Anordnung der Sensoren zueinander herangezogen werden.

Zweckmäßig wird das erfindungsgemäße Verfahren zur Bestimmung einer Anordnung zumindest zweier drahtloser Sensoren, insbesondere optischer Sensoren und/oder Radarsensoren und/oder Sonarsensoren und/oder Lidarsensoren, durchgeführt.

Vorteilhaft sind bei dem erfindungsgemäßen Verfahren keine zusätzlichen Hilfsmittel zur Bestimmung der Anordnung der Sensoren zueinander erforderlich, sondern es ist zur Bestimmung der Anordnung hinreichend, lediglich Messwerte der Sensoren selbst zu verwenden. Vorteilhafterweise lässt sich mittels des erfindungsgemäßen Verfahrens der Aufwand einer Erstinstallation, der Wartung oder der Änderung eines Sensornetzwerks deutlich reduzieren. Insbesondere erfordert das erfindungsgemäße Verfahren keine zusätzliche Infrastruktur, das heißt es muss kein Satellitensignal wie etwa ein GPS-Signal vorgesehen sein. Auch ist es nicht erforderlich, aktive Tags, beispielsweise Funk- oder Radarziele, vorzusehen. Die Unabhängigkeit des erfindungsgemäßen Verfahrens ermöglicht eine hohe Flexibilität im Einsatz dieses Verfahrens, insbesondere eröffnet es Freiräume bei der Anordnung von Sensoren eines Sensornetzwerkes; so ist etwa nicht zwangsläufig eine Sichtverbindung zwischen jeweils zwei Sensoren des Sensornetzwerks erforderlich. Mittels des erfindungsgemäßen Verfahrens lässt sich der Wartungsaufwand deutlich reduzieren. Beispielsweise kann zeitgesteuert, etwa in einem vorbestimmten zeitlichen Turnus, eine Neubestimmung der Anordnung der Sensoren zueinander erfolgen. Alternativ zu einem vorgesehenen zeitlichen Turnus kann insbesondere mittels statistischer Bewertungsverfahren ein Bedarf nach erneuter Bestimmung der Anordnung der Sensoren zueinander ermittelt und gegebenenfalls eine neue Bestimmung der Anordnung der Sensoren zueinander gestartet werden.

Kernmethodik des erfindungsgemäßen Verfahrens ist die Heranziehung der zeitlichen Evolution von mittels der Sensoren erfassten Trajektorien des Objekts bei dessen Bewegung zur Eigenlokalisierung der Sensoren. Aus Sicht eines jeden Sensors durchläuft die Trajektorie des Objekts - abhängig von der Art der erfassten Bewegungsgrößen oder diesen zugrundeliegenden Messwerten - einen anderen, jedoch eindeutigen Weg. Die Abweichung dieser verschiedenen Trajektorien voneinander spiegelt die zugrunde liegende Anordnung der Sensoren wider, was sich das Verfahren zunutze macht. Der Begriff "*Trajektorie*" meint dabei nicht nur die Position des Ziels in kartesischen Koordinaten, sondern bezieht sich generell auf den Verlauf der Bewegungsgrößen oder diesen zugrundeliegenden Messwerten ausgedrückt als mathematische Funktion.

Das erfindungsgemäße Verfahren erfordert grundsätzlich keine Parametrierung, das heißt eine aufwändige algorithmische Anpassung an die jeweiligen Sensoren oder an Besonderheiten der Umgebung ist entbehrlich. Das erfindungsgemäße Verfahren beruht vielmehr auf einer Ermittlung und Heranziehung einer Bewegungsgröße oder einer von dieser abgeleiteten Größe. Auf diese Weise lässt sich das erfindungsgemäße Verfahren auch einsetzen bei Sensornetzwerken mit heterogenen Sensorsystemen, etwa umfassend verschiedene Sensortypen und/oder Sensorkonfigurationen. Vorteilhafterweise lässt sich das erfindungsgemäße Verfahren in entsprechender Weise für eine Vielzahl von Drahtlossensoren durchführen, solange die entsprechenden, nachfolgend näher erläuterten, Bewegungsgrößen erfassbar sind.

In einer vorteilhaften Weiterbildung des erfindungsgemäßen Verfahrens umfasst die relative Anordnung der Sensoren zueinander zumindest die relative Orientierung der Sensoren zueinander.

Erfindungsgemäß umfasst die zumindest eine mittels jeweils eines Sensors ermittelte Bewegungsgröße zumindest die Bewegungsrichtung des bewegten Objekts, zumindest relativ zum Sensor. Aus der Sicht je eines der Sensoren bewegt sich das bewegte Objekt jeweils entlang einer anderen, jedoch eindeutigen, Trajektorie. Die Abweichung dieser unterschiedlichen Trajektorien einzelner der Sensoren voneinander spiegelt die zugrundeliegende unterschiedliche Anordnung der einzelnen Sensoren wieder. Insbesondere sind die unterschiedlichen Orientierungen dieser Trajektorien mit den unterschiedlichen Orientierungen der einzelnen Sensoren korreliert. Folglich lässt sich aus der Abweichung der Trajektorien untereinander auf die Orientierung der einzelnen Sensoren schließen. Bei der Bewegungsrichtung im Rahmen dieser Anmeldung handelt es sich entweder um eine momentane Bewegungsrichtung des bewegten Objekts zu einem bestimmten Zeitpunkt oder aber um eine während eines Zeitintervalls unveränderliche Bewegungsrichtung eines entlang einer Geraden bewegten Objekts. Es versteht sich, dass unter einer Bewegungsrichtung relativ zum Sensor eine Bewegungsrichtung relativ zu einer Orientierung des Sensors zu verstehen ist. Zweckmäßigerweise wird bei dem erfindungsgemäßen Verfahren die Bewegungsrichtung des bewegten Objekts mittels je eines der Sensoren derart ermittelt, dass zunächst die zeitliche Ableitung der Positionstrajektorie des bewegten Objekts, das heißt die zeitliche Ableitung in zwei oder drei Raumkoordinaten, erfasst wird. Der so erfasst Geschwindigkeitsvektor gibt mit seiner Orientierung die Bewegungsrichtung an. Geeigneterweise kann der Geschwindigkeitsvektor auf seinen Betrag normiert sein.

Der Geschwindigkeitsvektor des bewegten Objekts lässt sich beispielsweise derart mit je einem der Sensoren ermitteln, dass ein solcher Sensor herangezogen wird, welcher zur Erfassung des Abstandes des Objekts vom Sensor sowie zur Erfassung der Richtung des Objekts, in welcher dieses vom Sensor aus betrachtet befindlich ist, ausgebildet ist. Der Abstand ist beispielsweise über eine Laufzeitmessung eines von dem Sensor abgestrahlten Signals, welches von dem Objekt reflektiert und nachfolgend wieder vom Sensor erfasst wird, ermittelbar. Die Richtung des Objekts lässt sich beispielsweise mittels einer phasensensitiven Erfassung des reflektierten Funksignals bewerkstelligen. Die Winkel zwischen den erfindungsgemäß mittels je eines der Sensoren ermittelten Bewegungsrichtungen liefern somit direkt die relativen Orientierungswinkel der jeweiligen Sensoren. Es versteht sich, dass mittels je eines der Sensoren die Richtung nicht allein mittels eines Winkels, sondern auch im dreidimensionalen Raum mittels zweier Winkel erfassbar ist. Das erfindungsgemäße Verfahren lässt sich folglich auch im dreidimensionalen Raum in entsprechender Weise durchführen.

Erfindungsgemäß umfasst die zumindest eine mittels je eines der Sensoren ermittelte Bewegungsgröße zumindest die Geschwindigkeit des Objekts entlang der Richtung einer jeweils den Sensor und das Objekt verbindenden geraden Strecke. Zweckmäßigerweise wird bei dem erfindungsgemäßen Verfahren diese Geschwindigkeit mittels des Dopplereffekts erfasst.

Bevorzugt wird bei dem erfindungsgemäßen Verfahren mittels je eines der Sensoren die Richtung des Objekts, in welcher dieses vom Sensor aus betrachtet befindlich ist, ermittelt und zur Bestimmung der Anordnung herangezogen. Eine solche Richtungsbestimmung kann beispielsweise im Falle von Radarsensoren mittels einer Anordnung von zwei oder mehr phasensensitiven Antennen eines Sensors erfolgen.

Besonders bevorzugt wird bei dem erfindungsgemäßen Verfahren mittels je eines der Sensoren jeweils die Richtung des Objekts, in welcher dieses vom Sensor aus betrachtet befindlich ist, ermittelt und in Abhängigkeit von der Geschwindigkeit des Objekts entlang der Richtung einer jeweils den Sensor und das Objekt verbindenden geraden Strecke erfasst, wobei zur Bestimmung der Anordnung diejenigen Richtungen, in welchen jeweils die ermittelte Geschwindigkeit verschwindet, herangezogen werden. Wie zuvor bereits erläutert, wird zweckmäßigerweise bei dem erfindungsgemäßen Verfahren der Dopplereffekt zur Ermittlung der Geschwindigkeit genutzt. Die Geschwindigkeit (wie zuvor erwähnt) sowie die Richtung, charakterisiert durch einen Winkel, bilden eine so genannte Winkel-Doppler-Trajektorie, welche mittels der Zuordnungsvorschrift

$$v_x' = v_r \cos \phi \qquad\qquad (1)$$
$$v_y' = v_r \sin \phi$$

einen Kreis in einem kartesischen Koordinatensystem bildet. Der Mittelpunkt eines solchen Kreises ist die halbe komponentenweise Geschwindigkeit des bewegten Objekts in kartesischen Koordinaten aus jeweiliger Sensorsicht. Der Radius dieses Kreises repräsentiert den halben Betrag der Geschwindigkeit des bewegten Objekts. Dieser Kreis schneidet den Ursprung gemäß vorgenannter Zuordnungsvorschrift in den Koordinaten $v_x{}'$, $v_y{}'$ genau dann, wenn das bewegte Objekt den nächsten Punkt der Annäherung an den Sensor, das heißt Tangentialbewegung, erreicht. An diesem Punkt der nächsten Annäherung an den Sensor ist die Geschwindigkeit des Objekts auf den Sensor zu oder vom Sensor weg gerade gleich Null. In diesem Falle reduziert sich die Messung allein auf den Winkel $\phi$, welcher die Richtung, in welcher das Objekt vom jeweiligen Sensor aus betrachtet befindlich ist, angibt. Werden mehrere Winkel $\phi$ mehrerer Sensoren erfasst, so geben diese Winkel $\phi$ die relative Orientierung der jeweiligen Sensoren zueinander an.

Je nach Orientierung der jeweiligen Sensoren kann das Objekt an dem Punkt seiner nächsten Annäherung an den jeweiligen Sensor nicht notwendigerweiser erfasst werden. In solchen Fällen wird deshalb zweckmäßigerweise bei dem erfindungsgemäßen Verfahren die Bestimmung der Kreisbahnen wie zuvor beschrieben mittels, insbesondere nichtlinearer, Regression und/oder Extrapolation bestimmt. Zweckmäßigerweise erfolgt eine solche nichtlineare Regression mit einer Nebenbedingung, gemäß welcher die Ursprünge der aus verschiedenen Messungen desselben Sensors resultierenden Kreisbahnen als Fixpunkt festgesetzt werden und im vorgenannten Fall einer Kreisbahn ein gleicher Radius für sämtliche Kreisbahnen angesetzt wird, so dass eine Regression bereits ab einem ersten Messwert des Sensors erfolgen kann.

Eine Abweichung in der Richtung $\phi$ führt zu einer Verschiebung des Messwertes entlang des Kreisbogens; Fehler in der relativen Geschwindigkeit $v_r$ hingegen beeinflussen den geschätzten Kreisradius. Eine Änderung der Bewegungsrichtung, das heißt eine Rotation der Geschwindigkeitskoordinaten des bewegten Objekts, beeinflusst jedoch sämtliche Kreismittelpunkte sämtlicher Sensoren gleichermaßen und beeinflusst damit nicht die Winkelunterschiede. Im Falle einer nichtkonstanten Geschwindigkeit des bewegten Objekts hingegen resultiert ein variabler Kreisradius, so dass statt einer fixen Kreisbahn geeigneterweise eine abschnittsweise Annäherung für veränderliche Kreisradien und/oder eine geeignete Kurvenanpassung genutzt wird. In einer zweckmäßigen Weiterbildung des erfindungsgemäßen Verfahrens wird mittels je eines der Sensoren der Abstand des Objekts vom Sensor ermittelt und zur Bestimmung der Anordnung herangezogen. Zweckmäßigerweise wird die Laufzeit eines elektromagnetischen Signals, welches vom Sensor abgestrahlt wird und nachfolgend vom Objekt reflektiert und wieder vom Sensor empfangen wird, zur Ermittlung des Abstandes des Objekts vom Sensor herangezogen.

Geeigneterweise wird bei dem Verfahren gemäß der Erfindung der Abstand der Sensoren zueinander bestimmt. Besonders bevorzugt wird bei dem Verfahren gemäß der Erfindung der Versatz der Sensoren zueinander bestimmt, insbesondere in der Art eines Translationsvektors. Auf diese Weise sind bei dem erfindungsgemäßen Verfahren sowohl der Abstand der Sensoren zueinander sowie die Orientierung der Sensoren zueinander bestimmt. Die relative Anordnung der Sensoren zueinander ist daher eindeutig festgelegt.

Vorteilhafterweise wird bei dem erfindungsgemäßen Verfahren zur Ermittlung des Abstandes der Sensoren zueinander die relative Orientierung der Sensoren zueinander herangezogen, wie zuvor erläutert. Geeigneterweise werden zusätzlich mittels je eines der Sensoren der Abstand des Objekts vom Sensor ermittelt und zur Bestimmung der Anordnung herangezogen sowie die Richtung des Objekts, in welcher dieses vom Sensor aus betrachtet befindlich ist, ermittelt und zur Bestimmung der Anordnung herangezogen.

Liegt die relative Orientierung der Sensoren zueinander in Form von relativen Winkeln $\theta_{kn}$ zwischen jeweils zwei Sensoren $k$, $n$ vor, so kann ein die beiden Sensoren $k$, $n$ verbindender Weg $d_{nk}$ insbesondere aus der Positionsmessung $p_k$ gemäß

$$\mathbf{d}_{nk} = \mathbf{p_n} - \begin{bmatrix} \cos\theta_{kn} & \sin\theta_{kn} \\ -\sin\theta_{kn} & \cos\theta_{kn} \end{bmatrix} \mathbf{p_k} \qquad\qquad (2)$$

geschlossen werden.

Geeigneterweise wird bei dem erfindungsgemäßen Verfahren zur Bestimmung einer Anordnung von mindestens drei Sensoren zueinander jeweils auf Paare der Sensoren ein Verfahren wie zuvor beschrieben, angewandt.

Das erfindungsgemäße Sensornetzwerk umfasst zumindest zwei Sensoren sowie eine Auswerteeinrichtung, welche eingerichtet ist, mittels Daten jedes der Sensoren zumindest eine Bewegungsgröße des bewegten Objekts zu ermitteln und diese Bewegungsgrößen oder jeweils davon abgeleitete Größen miteinander zu verknüpfen und zur Bestimmung einer relativen Anordnung der Sensoren zueinander heranzuziehen.

Geeigneterweise ist das erfindungsgemäße Sensornetzwerk ein drahtloses Sensornetzwerk, insbesondere ein Sensornetzwerk, welches mit optischen Sensoren und/oder mit Radarsensoren und/oder mit Sonarsensoren und/oder mit Lidarsensoren gebildet ist.

Besonders bevorzugt ist das erfindungsgemäße Sensornetzwerk ein heterogenes Netzwerk, d.h., das Sensornetzwerk umfasst unterschiedliche Sensortypen, insbesondere zumindest zwei unterschiedliche Sensortypen der

**EP 3 060 942 B1**

Gruppe optische Sensoren, Radarsensoren, Sonarsensoren und Lidarsensoren.

Nachfolgend wird die Erfindung anhand in der Zeichnung dargestellter Ausführungsbeispiele näher erläutert. Es zeigen:

Figur 1    ein erfindungsgemäßes Sensornetzwerk mit zwei Radarsensoren bei der Durchführung eines erfindungsgemäßen Verfahrens zur Bestimmung einer Anordnung der Radarsensoren zueinander in der Situation der gleichzeitigen Erfassung eines bewegten Objekts in einer Prinzipskizze in einer Draufsicht,

Figur 2    das Sensornetzwerk gem. Fig. 1 bei der Durchführung des erfindungsgemäßen Verfahrens gem. Fig. 1 in der Situation einer nicht gleichzeitigen Erfassung eines bewegten Objekts in einer Prinzipskizze in einer Draufsicht,

Figur 3    diagrammatisch eine Berücksichtigung mehrerer Messwerte je Radarsensor des erfindungsgemäßen Sensornetzwerks gem. Fig. 1 bei der Durchführung des erfindungsgemäßen Verfahrens,

Figur 4    ein weiteres Ausführungsbeispiel eines erfindungsgemäßen Sensornetzwerks mit zwei Radarsensoren bei der Durchführung eines weiteren Ausführungsbeispiel eines erfindungsgemäßen Verfahrens in der Situation der gleichzeitigen Erfassung eines bewegten Objekts in einer Prinzipskizze in einer Draufsicht sowie

Figur 5    ein weiteres Ausführungsbeispiel eines erfindungsgemäßen Sensornetzwerks mit zwei Radarsensoren bei der Durchführung eines weiteren Ausführungsbeispiels eines erfindungsgemäßen Verfahrens in der Situation der gleichzeitigen Erfassung eines bewegten Objekts in einer Prinzipskizze in einer Draufsicht.

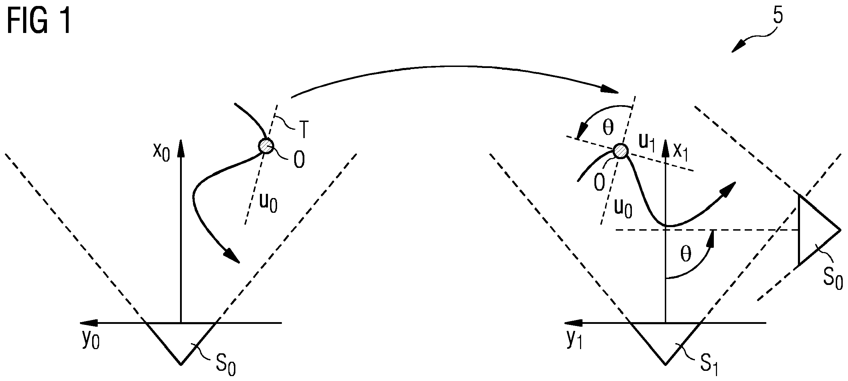

Das in Fig. 1 dargestellte Sensornetzwerk 5 umfasst einen ersten Radarsensor $S_0$ sowie einen zweiten Radarsensor $S_1$.

Erster und zweiter Radarsensor $S_0$ und $S_1$ sind jeweils ausgebildet, ihren Abstand $R$ zu einem Objekt $O$ zu messen. Die Messung des Abstands $R$ zum Objekt $O$ (oder äquivalent die Messung des Abstands $R$ vom Objekt $O$ zum jeweiligen Radarsensor $S_0$, $S_1$) erfolgt in an sich bekannter Weise über eine Laufzeitmessung eines vom Radarsensor $S_0$, $S_1$ jeweils abgestrahlten Radarsignals, welches vom Objekt $O$ reflektiert und nachfolgend vom Radarsensor $S_0$, $S_1$ empfangen und mittels einer Auswerteelektronik (nicht explizit dargestellt) zur Ermittlung der Laufzeit ausgewertet wird.

Ferner sind erster und zweiter Radarsensor $S_0$, $S_1$ jeweils ausgebildet, in an sich bekannter Weise die Richtung, unter welcher das Objekt $O$ vom Radarsensor $S_0$, $S_1$ aus betrachtet befindlich ist, mithin den Winkel $\phi$, unter welchem das Objekt $O$ vom Radar Radarsensor $S_0$, $S_1$ aus betrachtet gegenüber einer Referenzrichtung relativ zum Radarsensor $S_0$, $S_1$ aus erscheint, zu messen. Dazu weisen erster und zweiter Radarsensor $S_0$ und $S_1$ jeweils eine Gruppenantenne (nicht explizit dargestellt) auf, welche zum phasensensitiven Empfang eines vom Objekt $O$ reflektierten Radarsignals ausgebildet ist.

Mithin sind erster und zweiter Radarsensor $S_0$ und $S_1$ ausgebildet, jeweils Abstand R und den die Richtung des Objekts $O$ angebenden Winkel $\phi$ des Objekts $O$ relativ zum Radarsensor $S_0$, $S_1$ zu erfassen. D.h., die Position des Objekts $O$ wird jeweils in Polarkoordinaten $(R, \phi)$ des jeweiligen Radarsensors $S_0$, $S_1$, in welchen jeweils der Radarsensor $S_0$, $S_1$ im Ursprung gelegen ist, erfasst.

Der Winkel gibt dabei im dargestellten Ausführungsbeispiel stets den Winkel $\phi$ innerhalb einer zum Erdboden parallelen Ebene, in den Darstellungen parallel zur Zeichenebene, an. Der Winkel $\phi$ bildet folglich einen Aspektwinkel.

Das Objekt $O$ ist in sämtlichen dargestellten Ausführungsbeispielen jeweils ein bewegtes Objekt, im dargestellten Fall ein Landfahrzeug (in nicht eigens dargestellten weiteren Ausführungsbeispielen kann das Objekt $O$ auch ein beliebiges sonstiges bewegtes Objekt, beispielsweise eine Person, ein Flugzeug oder ein Maschinenteil sein). Die Ausführungsbeispiele werden jeweils zunächst an einem gleichförmig bewegtem Objekt $O$ erläutert, d.h. in demjenigen Bezugssystem in welchem die Radarsensoren $S_0$, $S_1$ des Sensornetzwerks 5 ruhen, sind Richtung und Betrag der Geschwindigkeit des Objekts $O$ zeitlich konstant (erweiterte Verfahrensschritte bei nicht-gleichförmiger Bewegung des Objekts $O$ werden jeweils im Zusammenhang mit dem jeweiligen Ausführungsbeispiel erläutert).

Mittels jedes der Radarsensoren $S_0$, $S_1$ wird nun in bekanntem zeitlichem Abstand der Zeitdauer $\Delta\tau$ jeweils die Position des Objekts $O$ in Polarkoordinaten erfasst. Die Erfassung der Position des Objekts $O$ in Polarkoordinaten erfolgt mittels beider Radarsensoren $S_0$, $S_1$ zeitlich synchron. Somit wird mittels jedes der Radarsensoren $S_0$, $S_1$ eine Bewegungsgröße, nämlich die Positionsänderung des Objekts $O$ während der Zeitdauer $\Delta\tau$ erfasst. Die zeitliche Posi-tionsänderung des Objekts $O$ entspricht der Geschwindigkeit u des Objekts $O$ und lässt sich in kartesische Koordinaten $x, y$ relativ zu jedem Radarsensor $S_0$, $S_1$ vektoriell ausdrücken:

$$u = \left[ \frac{\partial x}{\partial \tau}, \frac{\partial y}{\partial \tau} \right],$$

welche im Falle der gleichförmigen Bewegung des Objekts *O* der Positionsänderung des Objekts *O* während der Zeitdauer $\Delta \tau$ exakt entspricht (im Falle von Abweichungen der Bewegung des Objekts *O* von einer gleichförmigen Bewegung wird die Zeitdauer $\Delta \tau$ hinreichend klein gewählt, sodass die Momentangeschwindigkeit u wie zuvor angegeben in hinreichend genauer Näherung mittels der zeitlichen Positionsänderung des Objekts *O* während der Zeitdauer $\Delta \tau$ erfassbar ist).

Diese Richtung der Geschwindigkeit u ist eine inhärente Eigenschaft der Bewegung des Objekts *O* und somit unabhängig von der absoluten Position des Ziels wie auch dem relativen Abstand der Radarsensoren $S_0$, $S_1$ untereinander.

Der Betrag der mittels der Radarsensoren $S_0$, $S_1$ erfassten Geschwindigkeit u ist unabhängig von dem Umstand, mittels welches Radarsensors $S_0$, $S_1$, diese jeweils ermittelt wird.

Die gemessene Bewegungsrichtung jedoch hängt direkt von der Richtung, unter welcher das Objekt *O* vom Radarsensor $S_0$, $S_1$ aus betrachtet befindlich ist, also von dem Winkel $\phi$, unter welchem das Objekt *O* vom Radar Radarsensor $S_0$, $S_1$ aus betrachtet gegenüber einer Referenzrichtung fix zur Orientierung des Radarsensors $S_0$, $S_1$ aus erscheint, und folglich direkt von der Orientierung des Radarsensors $S_0$, $S_2$, ab.

Wird der Radarsensor $S_0$, $S_1$ um eine zum Erdboden senkrechte Richtung rotiert, so ändert sich dem Winkel $\phi$ um genau die negative Rotation. Der Schnittwinkel der mittels zweier Radarsensoren erfassten Geschwindigkeitsrichtungen zu ihren jeweils äquivalenten Zeitpunkten liefert damit direkt die relative Orientierung

$$\theta_{01} = \arccos\left( \frac{u_0 \cdot u_1}{\|u_0\| \cdot \|u_1\|} \right) \tag{1}$$

der Radarsensoren $S_0$, $S_1$ zueinander, wobei $u_0$ die mittels des Radarsensors $S_0$ gemessene vektorielle Geschwindigkeit des Objekts *O* und $u_1$ die mittels des Radarsensors $S_1$ gemessene Geschwindigkeit des Objekts *O* angeben (Fig. 1). Im Falle mehrerer Radarsensoren ist die relative Orientierung der Radarsensoren $S_n$, $S_k$ zueinander jeweils

$$\theta_{nk} = \arccos\left( \frac{u_n \cdot u_k}{\|u_n\| \cdot \|u_k\|} \right), \tag{2}$$

wobei die vektorielle Geschwindigkeit $u_n$ jeweils die mittels des Radarsensors $S_n$ und die vektorielle Geschwindigkeit $u_k$ die mittels des Radarsensors $S_k$ erfasste Geschwindigkeit des Objekts *O* angeben.

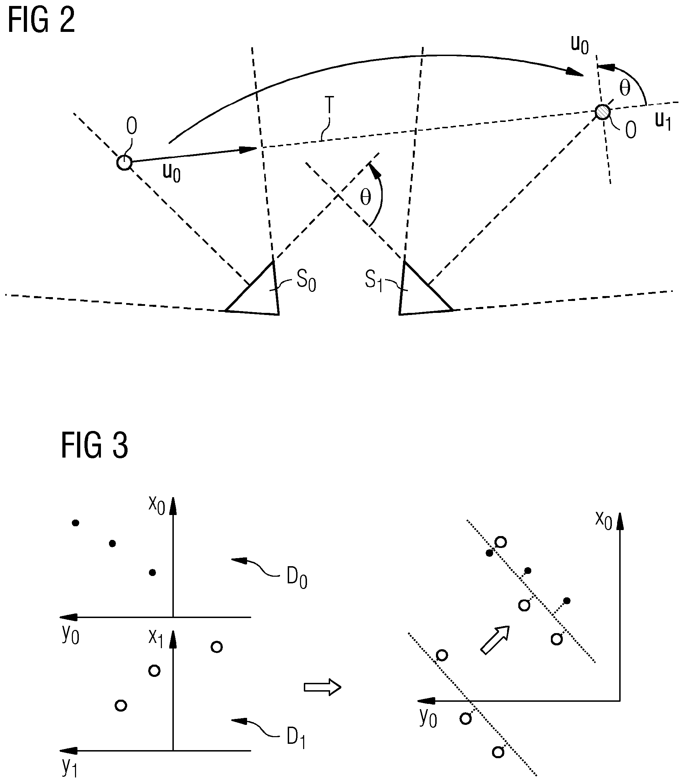

Ist das Ziel nicht gleichzeitig von beiden Sensoren beobachtbar, so wird eine Trajektorie auf Basis eines Bewegungsmodells oder vorheriger Messwerte bis zum zeitlichen Schnittpunkt extrapoliert (Fig. 2).

Bei synchroner Erfassung der Positionen des Objekts *O* mittels der Radarsensoren $S_0$, $S_1$ ist das Verfahren zudem stets robust gegenüber Änderungen der vektoriellen Geschwindigkeit u (also Änderungen des Betrages oder der Richtung der Geschwindigkeit *u*).

Es ist ausreichend mittels jedes Radarsensors $S_0$, $S_1$ die Geschwindigkeit des Objekts *O* $u_0$ und $u_1$ jeweils ein einziges Mal zu erfassen. Jedoch werden im dargestellten Ausführungsbeispiel Messungenauigkeiten mit zunehmender Anzahl der erfassten Geschwindigkeiten durch geeignete Schätzverfahren bzw. Filterung reduziert (z.B. Methode der kleinsten Quadrate, Fig. 3).

Zur vollständigen Bestimmung der Anordnung der Radarsensoren $S_0$, $S_1$ zueinander bleibt der Versatz der Radarsensoren $S_0$, $S_1$ zueinander zu bestimmen:

Dazu wird der Versatz als Translationsvektor zwischen den Radarsensoren $S_0$, $S_1$ mithilfe der relativen Orientierung $\theta_{01}$ sowie der Positionen $\mathbf{p}_k$, $\mathbf{p}_n$ des Objekts *O* berechnet:

Ist die relative Orientierung $\theta_{01}$ zwischen zwei Radarsensoren $S_0$, $S_1$, beispielsweise mittels der Durchführung des erfindungsgemäßen Verfahrens wie oben beschrieben, bekannt kann direkt eine Bestimmung des Versatzes der Radarsensoren $S_0$, $S_1$ erfolgen.

Hierzu wird gemäß

$$\mathbf{d}_{nk} = \mathbf{p}_n - \begin{bmatrix} \cos \theta_{kn} & \sin \theta_{kn} \\ -\sin \theta_{kn} & \cos \theta_{kn} \end{bmatrix} \mathbf{p}_k \tag{3}$$

der mittels des Radarsensors *k* ermittelte Ortsvektor $\mathbf{p}_k$ des Objekts *O* relativ zum Radarsensor *k* mit der relativen Orientierung $\theta_{kn}$ zwischen den Radarsensoren $S_k$ und $S_n$, also mittels einer passiven Rotationsmatrix, oder mit der relativen Orientierung $\theta_{kn}$ zwischen den Radarsensoren $S_n$ und $S_k$, also mittels einer aktiven Rotationsmatrix, rotiert und um den mittels des Radarsensors $S_n$ zeitlich synchron zur Ermittlung des Ortsvektors $\mathbf{p}_k$ ermittelten Ortsvektor $\mathbf{p}_n$ des Objekts *O* relativ zum Radarsensor $S_n$ verschoben.

Zur Durchführung dieses Verfahrens ist eine Ermittlung des Ortsvektors $\mathbf{p}_k$, $\mathbf{p}_n$ je Radarsensor $S_k$, $S_n$ ausreichend, jedoch sind Messungenauigkeiten wie zuvor anhand von Fig. 3 beschrieben reduzierbar, indem statt der direkten Bestimmung des Versatzes wie zuvor beschrieben eine Fehlerminimierung, d.h. eine bestmögliche Überlagerung mehrerer Messwerte angestrebt wird (vgl. Abb. 3).

Auch dieses Verfahren verhält sich bei gleichzeitigen Positionsmessungen robust gegenüber Geschwindigkeits- oder Richtungsänderungen des Objekts *O*.

Alternativ oder zusätzlich zur vorgenannten Bestimmung der relativen Orientierung $\theta_{01}$ der Radarsensoren $S_0$, $S_1$ zueinander kann auch eine Schätzung der Orientierung aus nichtlinearer Regression erfolgen:

Dazu werden in diesem weiteren Ausführungsbeispiel des erfindungsgemäßen Verfahrens Radarsensoren $S_0$, $S_1$ herangezogen, welche jeweils zumindest ausgebildet sind, die Richtung des Objekts *O*, in welcher dieses vom Radarsensor aus betrachtet befindlich ist, zu ermitteln sowie zumindest die Geschwindigkeit des Objekts *O* entlang der Richtung einer jeweils den Radarsensor und das Objekt verbindenden Strecke zu ermitteln. Die Richtung des Objekts *O* wird dabei wie in den vorhergehend beschriebenen Ausführungsbeispielen mittels des Winkels $\phi$ ausgedrückt. Die Geschwindigkeit des Objekts *O* entlang der Richtung einer jeweils den Radarsensor und das Objekt *O* verbindenden Strecke wird jeweils mit $v_r$ bezeichnet.

Bei konstanter vektorieller Geschwindigkeit $\boldsymbol{u}$ des Objekts *O* beschreibt die zeitliche Evolution der Größen $\phi$, $v_r$ einen Kreis K im über

$$v_x' = v_r \cos\phi \qquad\qquad (1)$$
$$v_y' = v_r \sin\phi$$

definierten kartesischen Raum.

Der Mittelpunkt dieses Kreises K ist

$$\left[\frac{v_x}{2}, \frac{v_y}{2}\right],$$

d.h. die halbe komponentenweise Geschwindigkeit des Objekts in *x* - und *y* -Richtung aus jeweiliger Sicht des Radarsensors $S_0$, $S_1$.

Der Radius repräsentiert den halben Betrag $\frac{|v|}{2}$ der Geschwindigkeit $\boldsymbol{u}$ des Objekts.

Da $v = \sqrt{v_x^2 + v_y^2}$ gilt, schneidet dieser Kreis potentiell den Ursprung in $\left(v_x', v_y'\right)$, nämlich genau dann, wenn das Objekt *O* den nächsten Punkt der Annäherung an den Radarsensor, also einen *Tangentialpunkt* der *Tangentialbewegung* erreicht. Im Tangentialpunkt ist $v_r$ = 0m/s bekannt, d.h. die Messung reduziert sich auf die Messung des Winkels $\phi$ des Radius an diesem Tangentialpunkt.

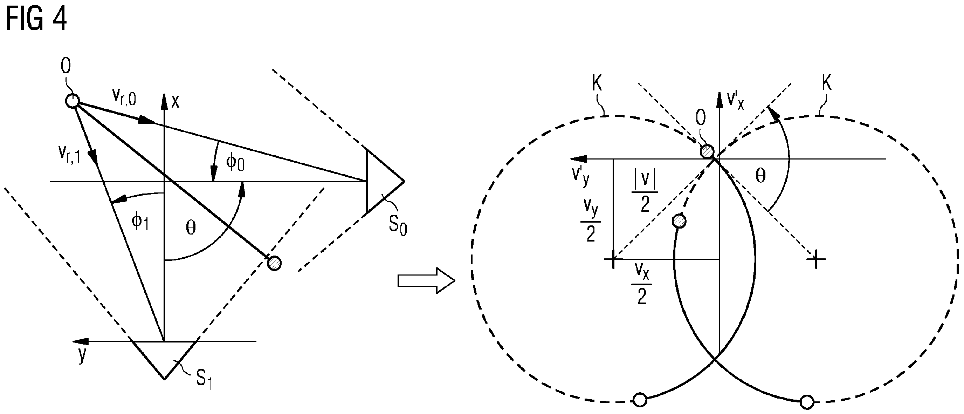

Wie zuvor zu den Fig. 1 und 2 beschrieben ist die relative Orientierung $\theta$ damit analog zu (1) durch den Schnittwinkel der Kreistangenten im Ursprung gegeben (Abb. 4).

In vielen Fällen wird ein Objekt *O* den Tangentialpunkt nie erreichen, insbesondere nicht zeitgleich aus Sicht zweier örtlich versetzter Radarsensoren. Deshalb wird zur Bestimmung der Kreistangenten mittels nichtlinearer Regression oder anderer geeigneter Verfahren pro Radarsensor die Trajektorie approximiert bzw. extrapoliert.

Als Nebenbedingungen für dieses Optimierungsproblem werden der Ursprung als Fixpunkt sowie im beispielhaften Fall eines Kreises *K* ein gleicher Radius für alle Kreise *K* gesetzt, somit kann die Regression bereits ab dem ersten Messwert erfolgen. Eine Abweichung im Winkel $\phi$ führt zu einer Verschiebung des Messwerts entlang des Kreisbogens; ein Kreisumlauf beträgt $\pi$. Fehler in der Geschwindigkeit $v_r$ des Objekts *O* entlang der Richtung einer jeweils den Radarsensor $S_0$, $S_1$ und das Objekt *O* verbindenden Strecke beeinflussen dagegen den geschätzten Radius des Kreises *K*.

Eine Änderung der Bewegungsrichtung, d.h. eine Rotation der Geschwindigkeitskoordinaten, verschiebt sämtliche Kreismittelpunkte gleichermaßen und beeinflusst damit nicht den Schnittwinkel der Tangenten im Ursprung. Ist die Geschwindigkeit *v* des Objekts *O* nicht konstant, äußert sich dies in einem variablen Radius, sodass statt einer fixen Kreisbahn eine geeignete abschnittsweise Approximation für variable Kreisradien oder eine generische Kurvenanpassung verwendet wird.

Alternativ zur Schätzung des Translationsvektors, also des Versatzes der Radarsensoren $S_0$, $S_1$ zueinander, kann auch durch eine Einpassung von Bewegungsvektoren in $\phi$-Verläufe erfolgen:

Stehen - wie im Weiteren angenommen - nur Messwerte des Winkels $\phi$ zur Verfügung, so ist die Entfernung $R$ des Objekts $O$ von jedem Radarsensor $S_0$, $S_1$ zu schätzen:

Wird die Bewegung des Objekts $O$, also der Geschwindigkeitsvektor, in Polarkoordinaten dargestellt, ergibt sich mit der Zeitdifferenz $\Delta t$ zwischen den Messwerten

$$\frac{\partial x}{\partial \tau} = v_x \Delta t = R_i \, \cos \phi_i - R_j \, \cos \phi_j$$

$$(4)$$

$$\frac{\partial y}{\partial \tau} = v_y \Delta t = R_i \, \sin \phi_i - R_j \, \sin \phi_j$$

In Verbindung mit den Winkeln $\phi_i \neq \phi_j$ ist der Bewegungsvektor bzw. dessen Entfernung vom Radarsensor eindeutig in einem globalen Koordinatensystem. In Matrixform ist (4) direkt lösbar nach

$$\begin{bmatrix} R_i \\ R_j \end{bmatrix} = \begin{bmatrix} \cos \phi_i & -\cos \phi_j \\ \sin \phi_i & -\sin \phi_j \end{bmatrix}^{-1} \begin{bmatrix} v_x \\ v_y \end{bmatrix} \Delta t \, .$$

$$(5)$$

Die berechneten Entfernungen $R_i$ und gemessenen Winkel $\phi_i$ werden nun für Radarsensoren $n$ und $k$ in kartesische Koordinaten transformiert, womit die Position des Objekts $O$ $P_{i,n} = [x_{i,n} , y_{i,n}]$ und $P_{i,k}$ bekannt und der relative Translationsvektor gemäß (2) gegeben ist. Alternativ können (4) und (5) auch direkt in kartesischen Koordinaten formuliert werden. Ein Messwert pro Radarsensor ist dabei ausreichend, um den Translationsvektor zu berechnen. Die Robustheit des Verfahrens ist einerseits durch die Genauigkeit des Geschwindigkeitsvektors und andererseits durch den (möglichst großen) durchlaufenen Winkelbereich $|\phi_i - \phi_j|$ bestimmt.

Neben den hier dargestellten Verfahren sind abhängig vom Verlauf der Bewegungsgrößen, d.h. dem Bewegungsmodell des Objekts $O$, weitere Auswertemethoden denkbar. Hierzu können etwa eine Beschleunigung des Objekts $O$, eine definierte Kurvenbahn des Objekts $O$, aber auch andere für ein Bewegungsmodell charakteristische Bewegungsgrößen herangezogen werden, welche es ermöglichen, eine Trajektorie der Bewegungsgröße als beliebige mathematische Funktion zu erfassen. Durch Hinzunahme eines weiteren Winkels, etwa eines Elevationswinkels $\psi$ sind alle obigen Ausführungsbeispiele auch auf den dreidimensionalen Fall erweiterbar.

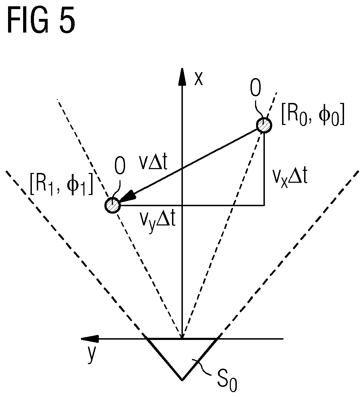

Wie in den zuvor anhand der Fig. 1 bis 5 erläuterten Ausführungsbeispielen ist das Verfahren zur Bestimmung einer Anordnung in zwei Teilverfahren zerlegbar: Zum einen wird die relative Rotation und zum anderen wird die relative Translation zwischen jeweils zwei Radarsensoren des Radarsensorpaares bestimmt.

Die Anwendung auf sämtliche Paare von Radarsensoren ermöglicht somit den Aufbau einer globalen "Sensorkarte". Dabei wird angenommen, dass entweder der Sichtbereich zweier Radarsensoren im Bereich der Zielmessung überlappt, oder im Falle nicht überlappender Bereiche das Ziel einem bekannten oder ausreichend predizierbaren Bewegungsmodell folgt.

Beispielhaft lässt sich eine Rotation aus Gradienten der Positionstrajektorie des Objekts $O$ und anschließend eine Translation aus Positionen des Objekts $O$ im $(R, \Phi)$-Raum bestimmen oder aber eine Bestimmung der Rotation aus nichtlinearer Regression im $(\Phi, v_r)$-Raum (nachfolgend auch Winkel-Doppler-Raum genannt) und ggf. anschließender Bestimmung der Translation wie zuvor beschrieben und ggf. zudem anschließender Bestimmung der Translation durch Einpassung von geschätzten Bewegungsvektoren in Winkel-Trajektorien vornehmen.

Das Verfahren ist in gleicher Art wie für Radarsensoren auch für optische Sensoren, Sonarsensoren, Lidarsensoren oder auch sonstige Drahtlossensoren einsetzbar, solange die entsprechenden Messgrößen zur Verfügung stehen. Wird ein kostengünstiges System angestrebt, so bietet die Bestimmung ausschließlich im Winkel-Doppler Raum klare Vorteile: Für die Messung der Dopplerfrequenz ist ein einfacher Dauerstrichsensor ausreichend; die Winkelmessung kann bereits über z.B. Phasenvergleich von nur zwei Empfangskanalen erfolgen. Die Verwendung von Dopplerfrequenzen bietet generell einen messtechnischen Vorteil, da die erzielbare Messgenauigkeit und Auflösung sowie der Messbereich weniger an Frequenz- bzw. Bandbreitenzulassung, sondern im Grunde an die verfügbare Messzeit gekoppelt ist. Desweiteren können alle Methoden wie sie zuvor beschrieben worden sind kombiniert bzw. parallel durchgeführt und damit die Verlässlichkeit und Robustheit der Positionsschätzung erhöht werden. Je nach erwarteter/gemessener Trajektorie des Objekts *O* und Fluktuation der Messwerte besteht so auch die Möglichkeit z.B. auf Basis von Plausibilitätsbewertungen automatisch zwischen den Methoden umzuschalten. Ebenso ist es möglich und sinnvoll, die paarweise Eigenlokalisierung in ein globales, kontinuierlich lernendes Modell einzubetten, um Schatzfehler zu minimieren.

Alle dargestellten Methoden sind stets geschlossen deterministisch formuliert und lösbar, was der Implementierbarkeit und jederzeitigen Nachvollziehbarkeit entgegenkommt.

**Patentansprüche**

1. Verfahren zur Bestimmung einer Anordnung zumindest zweier Sensoren zueinander, bei welchem ein bewegtes Objekt mittels der zumindest zwei Sensoren erfasst und mittels je eines der Sensoren zumindest eine Bewegungsgröße des bewegten Objekts ermittelt wird, wobei zumindest diese Bewegungsgrößen oder jeweils davon abgeleitete Größen gemeinsam zur Bestimmung einer relativen Anordnung der Sensoren zueinander herangezogen werden, **dadurch gekennzeichnet, dass** die zumindest eine mittels je eines der Sensoren ermittelte Bewegungsgröße zumindest die Geschwindigkeit des bewegten Objekts, zumindest relativ zum Sensor, umfasst und/oder ein Winkel zwischen mittels je eines der Sensoren relativ zu diesem Sensor ermittelten Bewegungsrichtungen bestimmt und zur Bestimmung der Anordnung herangezogen wird und/oder die zumindest eine mittels je eines der Sensoren ermittelten Bewegungsgröße zumindest die Geschwindigkeit des Objekts entlang der Richtung einer jeweils den Sensor und das Objekt verbindenden Strecke umfasst.

2. Verfahren nach Anspruch 1, bei welchem die relative Anordnung der Sensoren zumindest die relative Orientierung der Sensoren zueinander umfasst.

3. Verfahren nach einem der vorhergehenden Ansprüche, bei welchem mittels je eines der Sensoren die Richtung des Objekts, in welcher dieses vom Sensor aus betrachtet befindlich ist, ermittelt und zur Bestimmung der Anordnung herangezogen wird.

4. Verfahren nach einem der vorhergehenden Ansprüche, bei welchem mittels jeder der Sensoren jeweils die Richtung des Objekts, in welcher dieses vom Sensor aus betrachtet befindlich ist, ermittelt und in Abhängigkeit von der Geschwindigkeit des Objekts entlang der Richtung einer jeweils den Sensor und das Objekt verbindenden geraden Strecke erfasst wird, wobei zur Bestimmung der Anordnung diejenigen Richtungen, in welchen jeweils die ermittelte Geschwindigkeit verschwindet, herangezogen werden.

5. Verfahren nach einem der vorhergehenden Ansprüche, bei welchem mittels je eines der Sensoren der Abstand des Objekts vom Sensor ermittelt und zur Bestimmung der Anordnung herangezogen wird.

6. Verfahren nach einem der vorhergehenden Ansprüche, bei welchem der Versatz der Sensoren zueinander bestimmt wird.

7. Verfahren zur Bestimmung einer Anordnung von mindestens drei Sensoren zueinander, bei welchem jeweils auf Paare der Sensoren ein Verfahren nach einem der vorhergehenden Ansprüche angewandt wird.

8. Sensornetzwerk umfassend zumindest zwei Sensoren sowie eine Auswerteeinrichtung, welche eingerichtet ist, mittels Daten je eines der Sensoren zumindest eine Bewegungsgröße des bewegten Objekts zu ermitteln und diese Bewegungsgrößen oder jeweils davon abgeleitete Größen miteinander zu verknüpfen und zur Bestimmung einer relativen Anordnung der Sensoren zueinander nach einem Verfahren nach einem der vorhergehenden Ansprüche heranzuziehen.

**Claims**

1. Method for determining an arrangement of at least two sensors in relation to one another, in which a moving object is detected by means of the at least two sensors and at least one movement variable of the moving object is established by means of in each case one of the sensors, wherein at least these movement variables or variables respectively derived therefrom are used together for determining a relative arrangement of the sensors in relation to one another, **characterized in that** the at least one movement variable established by means of in each case one of the sensors comprises at least the velocity of the moving object, at least relative to the sensor, and/or an angle between movement directions, established by means of in each case one of the sensors relative to said sensor, is determined and used for determining the arrangement and/or the at least one movement variable established by means of in each case one of the sensors comprises at least the velocity of the object along the direction of a path connecting the sensor and the object in each case.

2. Method according to Claim 1, wherein the relative arrangement of the sensors comprises at least the relative orientation of the sensors in relation to one another.

3. Method according to either of the preceding claims, wherein by means of in each case one of the sensors the direction of the object, in which said object is situated as observed by the sensor, is established and used for determining the arrangement.

4. Method according to one of the preceding claims, wherein, by means of each one of the sensors, the direction of the object, in which said object is situated as observed by the sensor, is established and detected in each case in a manner dependent on the velocity of the object along the direction of a straight path in each case connecting the sensor and the object, wherein those directions in which the velocity established in each case vanishes are used for determining the arrangement.

5. Method according to one of the preceding claims, wherein, by means of in each case one of the sensors, the distance of the object from the sensor is established and used for determining the arrangement.

6. Method according to one of the preceding claims, wherein the offset of the sensors in relation to one another is determined.

7. Method for determining an arrangement of at least three sensors in relation to one another, wherein a method according to one of the preceding claims is applied in each case to pairs of the sensors.

8. Sensor network comprising at least two sensors and an evaluation device, which is configured to establish at least one movement variable of the moving object by means of data from in each case one of the sensors and to link these movement variables or variables derived therefrom in each case to one another and to use these for determining a relative arrangement of the sensors in relation to one another by a method according to one of the preceding claims.

**Revendications**

1. Procédé de détermination d'une disposition d'au moins deux capteurs les uns par rapport aux autres, dans lequel on détecte un objet en déplacement au moyen des au moins deux capteurs et on détermine, au moyen de, respectivement, l'un des capteurs, au moins une grandeur de déplacement de l'objet en déplacement, dans lequel on tire parti d'au moins ces grandeurs de déplacement ou, respectivement, de grandeurs qui s'en déduisent, conjointement pour déterminer une dispositif relative des capteurs les uns par rapport aux autres, **caractérisé en ce que** la au moins une grandeur de déplacement, déterminée au moyen, respectivement, de l'un des capteurs, comprend au moins la vitesse de l'objet en déplacement, au moins par rapport au capteur, et/ou on détermine un angle entre des directions de déplacement déterminées au moyen de, respectivement, l'un des capteurs par rapport à ce capteur et on en tire parti pour déterminer la disposition et/ou la au moins une grandeur de déplacement déterminée au moyen de, respectivement, l'un des capteurs, comprend au moins la vitesse de l'objet suivant la direction d'une étendue reliant, respectivement, le capteur et l'objet.

2. Procédé suivant la revendication 1, dans lequel la position relative des capteurs comprend au moins l'orientation relative des capteurs entre eux.

3. Procédé suivant l'une des revendications précédentes, dans lequel on détermine, au moyen de, respectivement, l'un des capteurs, la direction de l'objet dans laquelle celui-ci se trouve, considéré à partir du capteur, et on en tire parti pour déterminer la disposition.

4. Procédé suivant l'une des revendications précédentes, dans lequel, au moyen de chacun des capteurs, on détermine, respectivement, la direction de l'objet dans laquelle celui-ci se trouve, considéré à partir du capteur, et on la détecte en fonction de la vitesse de l'objet suivant la direction d'une étendue rectiligne reliant, respectivement, le capteur et l'objet, dans lequel, pour déterminer la disposition, on tire parti des directions dans lesquelles, respectivement, la vitesse déterminée disparaît.

5. Procédé suivant l'une des revendications précédentes, dans lequel on détermine, au moyen de, respectivement, l'un des capteurs, la distance de l'objet au capteur et on en tire parti pour déterminer la disposition.

6. Procédé suivant l'une des revendications précédentes, dans lequel on détermine l'écart des capteurs entre eux.

7. Procédé de détermination d'une disposition d'au moins trois capteurs entre eux, dans lequel on applique, respectivement, à des paires des capteurs un procédé suivant l'une des revendications précédentes.

8. Réseau de capteurs comprenant au moins deux capteurs ainsi qu'un dispositif d'exploitation, qui est conçu pour déterminer, au moyen de données, respectivement, de l'un des capteurs, au moins une grandeur de déplacement de l'objet en déplacement et pour combiner entre elles ces grandeurs de déplacement ou des grandeurs qui s'en déduisent, respectivement, et en tirer parti pour déterminer une disposition relative des capteurs entre eux par un procédé suivant l'une des revendications précédentes.

FIG 1

EP 3 060 942 B1

FIG 2

FIG 3

FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2461181 A1
- US 20060047471 A1